# FASCICULE DE BREVET EUROPEEN

(11) **EP 0 942 220 B1**
(45) Date de publication et mention de la délivrance du brevet: **20.11.2002**
(21) Numéro de dépôt: 99400610.4
(22) Date de dépôt: 12.03.1999
(51) Int. Cl.: F16L 55/027

(54) **Conditionneur d'écoulement pour canalisation de transport de gaz**
Strömungskonditionierer für Gase führende Leitungen
Flow conditioner for gas conveying pipes

(30) Priorité: 13.03.1998 FR 9803117
(43) Date de publication de la demande: 15.09.1999
(73) Titulaire: GAZ DE FRANCE, 75017 Paris (FR)
(72) Inventeur: Dutertre, Dominique, 75013 Paris (FR); De Laharpe, Vincent, 92160 Antony (FR)
(74) Mandataire: Thévenet, Jean-Bruno

(56) Documents cités:
- WO-A-95/08064
- WO-A-95/19504
- FR-A- 2 717 536
- US-A- 2 600 733
- US-A- 3 572 391

## Description

La présente invention a pour objet un conditionneur d'écoulement pour canalisation de transport de gaz, comprenant au moins une plaque perforée disposée essentiellement perpendiculairement à l'axe XX' de la canalisation et comportant un trou central et des ensembles de trous supplémentaires régulièrement répartis selon des couronnes concentriques centrées sur l'axe de la canalisation.

Lorsque des compteurs de volume de gaz à turbine sont installés dans des postes de livraison, en aval de détendeurs ou d'obstacles tels que des vannes, coudes, doubles coudes, réductions, tés, ou d'autres éléments de conduite non rectilignes, leur précision risque d'être affectée par les perturbations d'écoulement engendrées par ces obstacles. Une des solutions adoptées jusqu'alors consiste à laisser une grande longueur droite de canalisation entre le compteur et le dernier obstacle situé en amont de celui-ci. Outre le fait que cette solution se fait au détriment de la compacité des postes, il s'avère que les longueurs droites ne sont pas toujours suffisantes pour atténuer suffisamment les effets de certaines perturbations importantes.

Aussi, afin de supprimer les perturbations tout en réduisant la taille des postes, il est souvent nécessaire de faire appel à des conditionneurs d'écoulement. Ces équipements modifient la structure des écoulements en rapprochant leurs caractéristiques de celles d'écoulements non perturbés, dits pleinement développés ou établis, qui sont obtenus en aval de très grandes longueurs droites de canalisation.

Il existe de nombreux types de conditionneurs d'écoulement dont certains sont cités dans la norme ISO 5167 ou dans la norme AGA report 7. Néanmoins, si les conditionneurs existants sont capables de réduire la rotation de la veine gazeuse ou "swirl", très peu d'entre eux réduisent de manière satisfaisante la dissymétrie de l'écoulement ou les effets de jet violents observés en aval de certains détendeurs-régulateurs. Il sont conçus pour être utilisés avec des longueurs droites en amont et en aval correspondant à plusieurs fois le diamètre nominal des canalisations, ce qui limite leur intérêt lorsque l'on veut réaliser des postes de détente-comptage compacts.

De façon plus particulière, le document de brevet GB-A-2 235 064 décrit un conditionneur d'écoulement comprenant une plaque perforée comportant un trou central et un ensemble d'autres trous répartis selon des anneaux concentriques centrés sur le trou central. Dans chaque anneau, les trous sont régulièrement répartis et présentent le même diamètre, de sorte que le dispositif est axisymétrique. Le diamètre des trous diminue lorsque l'on passe du trou central à chacun des anneaux concentriques. Un tel conditionneur d'écoulement présente une certaine efficacité s'il est utilisé en combinaison avec des longueurs droites de canalisation, mais s'avère insuffisant pour une installation dans un poste de détente-comptage compact.

Les documents de brevet US-A-5 495 872 et US-A-5 529 093 décrivent un conditionneur d'écoulement comprenant une plaque perforée ne comportant pas de trou central, mais un ensemble de trous répartis essentiellement selon deux à quatre anneaux concentriques centrés sur le centre de la plaque perforée. Au sein d'un même anneau, les trous sont régulièrement répartis et présentent le même diamètre. Le diamètre des trous varie d'un anneau à l'autre. Un ensemble de trois trous de faible diamètre centrés sur les sommets d'un triangle équilatéral est disposé au centre des deux anneaux concentriques pour pallier l'absence de trou central. Une telle plaque perforée ne permet pas non plus d'optimiser les performances et les documents précités insistent sur l'utilisation de la plaque perforée en combinaison avec un dispositif amont anti-rotation de la veine gazeuse, composé d'un ensemble de tubes et espacé de la plaque perforée, des longueurs droites de canalisation de longueur non négligeable devant aussi être intégrées au conditionneur d'écoulement de part et d'autre de la plaque perforée.

La présente invention vise à remédier aux inconvénients précités et à permettre, avec un dispositif compact, de supprimer les effets de jet, de rotation de l'écoulement et les turbulences dus au passage du gaz dans un régulateur-détendeur ou certains éléments de conduite, tels que des doubles-coudes, des tés,... et d'obtenir un écoulement au niveau d'un compteur de gaz qui soit symétrique par rapport à l'axe de la canalisation, sans rotation de la veine gazeuse et avec un niveau de turbulence comparable à celui d'un écoulement pleinement développé.

Ces buts sont atteints grâce à un conditionneur d'écoulement pour canalisation de transport de gaz, comprenant au moins une plaque perforée disposée essentiellement perpendiculairement à l'axe XX' de la canalisation et comportant un trou central et des ensembles de trous supplémentaires régulièrement répartis selon des couronnes concentriques centrées sur l'axe de la canalisation,
caractérisé en ce que les trous supplémentaires sont répartis selon au moins trois couronnes concentriques de manière à définir une plaque perforée axisymétrique, en ce qu'au sein d'une même couronne, les trous circulaires présentent un même diamètre d₁, d₂, d₃, en ce que, lorsque l'on s'éloigne du trou central et que l'on passe d'une couronne à une autre couronne concentrique voisine, le diamètre des trous est modifié alternativement dans le sens d'une réduction et d'un accroissement et en ce que chaque couronne comprend un nombre de trous égal ou supérieur à six.

De façon plus particulière, la plaque perforée comprend autour du trou central circulaire, lorsque l'on s'éloigne de l'axe XX' de la canalisation, une première couronne interne comportant un ensemble de trous de petit diamètre d₁, une deuxième couronne intermédiaire (32) comportant un ensemble de trous de grand diamètre d₂ et une troisième couronne externe comportant un ensemble de trous dont le diamètre d₃ présente une valeur intermédiaire entre celles du petit diamètre d₁ et du grand diamètre d₂

La plaque perforée participe à l'atténuation des perturbations et au redéveloppement rapide de l'écoulement en aval. La position des trous et leurs dimensions ont été déterminées de telle sorte que l'écoulement en sortie soit symétrique par rapport à l'axe de la canalisation, sans rotation de la veine gazeuse et avec un niveau de turbulence comparable à celui d'un écoulement pleinement développé, de telle sorte que le redéveloppement rapide de l'écoulement soit favorisé.

Selon un mode de réalisation préférentiel, la plaque perforée comprend un trou central, douze trous de petit diamètre d₁ constituant une première couronne interne, huit trous de grand diamètre d₂ constituant une deuxième couronne intermédiaire et vingt trous de diamètre intermédiaire d₃ constituant une troisième couronne externe.

Avantageusement, le diamètre intermédiaire d₃ des trous constituant la troisième couronne externe de la plaque perforée est voisin du diamètre d₀ du trou central.

La plaque perforée présente de préférence une épaisseur e sensiblement égale au diamètre d₂ des trous de la deuxième couronne intermédiaire.

De façon optimisée, si Dl désigne le diamètre intérieur de la canalisation à laquelle est associé le conditionneur d'écoulement, dans la plaque perforée, les trous de petit diamètre d₁ sont répartis sur une première couronne interne dont le diamètre moyen D1 est égal à environ 0,23 Dl, les trous de grand diamètre d2 sont répartis sur une deuxième couronne intermédiaire dont le diamètre moyen D2 est égal à environ 0,46 Dl et les trous de diamètre intermédiaire d₃ sont répartis sur une troisième couronne externe dont le diamètre moyen D3 est égal à environ 0,84 DI.

Selon une réalisation préférentielle, si Dl désigne le diamètre intérieur de la canalisation à laquelle est associé le conditionneur d'écoulement, dans la plaque perforée, le trou central présente un diamètre d₀ égal à environ 0,12 Dl, les trous de la première couronne interne présentent un diamètre d₁ égal à environ 0,05 Dl, les trous de la deuxième couronne intermédiaire présentent un diamètre d₂ égal à environ 0,16 Dl et les trous de la troisième couronne externe présentent un diamètre d₃ égal à environ 0,12 Dl.

La plaque perforée peut également être associée à une plaque poreuse située en amont de la plaque perforée parallèlement à celle-ci. Dans ce cas, la plaque perforée sert de support mécanique pour la plaque poreuse qui peut ainsi subir une poussée importante dans le sens de l'écoulement.

La plaque poreuse améliore l'efficacité de la plaque perforée et présente un excellent pouvoir homogénéisant sur l'écoulement tout en détruisant les grosses structures turbulentes.

La plaque poreuse est réalisée en un matériau homogène ayant une porosité comprise entre 90 et 96%, et dont la surface de contact avec l'écoulement est fonction des dimensions des mailles et est comprise entre 500m²/m³ et 2500m²/m³.

Avantageusement, la plaque poreuse présente une épaisseur de l'ordre de 10 mm et est réalisée en une mousse de nickel-chrome très aérée.

La plaque perforée ou l'ensemble de la plaque perforée et d'une plaque poreuse sont disposés de façon centrée par rapport à l'axe de la canalisation et sont maintenus perpendiculairement par rapport à celui-ci.

Aussi, selon un mode particulier de réalisation, le conditionneur d'écoulement selon l'invention comprend un support annulaire extérieur qui est destiné à être monté entre deux brides de la canalisation et à l'intérieur duquel est placée la plaque perforée et le cas échéant la plaque poreuse.

Le support annulaire extérieur comprend un épaulement annulaire aval servant de butée pour la plaque perforée et la plaque perforée est maintenue plaquée contre ledit épaulement annulaire aval à l'aide d'une bague entretoise amovible.

Selon un mode particulier de réalisation, le conditionneur d'écoulement comprend une plaque poreuse intercalée entre une bague entretoise amovible et la plaque perforée, elle-même en butée contre l'épaulement annulaire aval.

Selon une caractéristique particulière, le support annulaire extérieur comprend des prises de pression radiales situées respectivement au niveau de la bague entretoise amovible amont et au niveau de l'épaulement aval pour permettre des mesures de pression différentielle.

Dans ce cas, un manomètre différentiel permet de surveiller l'évolution de la perte de charge de part et d'autre du conditionneur et ainsi de connaître le degré d'encrassement du corps poreux.

Le conditionneur d'écoulement selon l'invention est avantageusement disposé en aval d'un régulateur-détendeur et en amont d'un compteur et présente dans le sens axial une dimension qui n'excède pas environ le tiers du diamètre nominal DN de la canalisation de gaz.

D'autres caractéristiques et avantages de l'invention ressortiront de la description suivante de modes particuliers de réalisation, donnés à titre d'exemples, en référence aux dessins annexés, sur lesquels :
- la figure 1 est une vue en coupe axiale d'une canalisation équipée d'un conditionneur d'écoulement selon l'invention et montrant les modifications apportées dans l'écoulement gazeux par ce conditionneur,
- la figure 2 est une vue de face d'une plaque perforée constituant l'élément de base d'un conditionneur selon l'invention,
- la figure 3 est une section selon la ligne III-III de la figure 2,
- la figure 4 est une vue en coupe axiale montrant un exemple de montage de la plaque perforée des figures 2 et 3 à l'aide d'un support en forme de couronne,
- la figure 5 est une vue en coupe axiale analogue à celle de la figure 4, mais montrant la mise en oeuvre d'un conditionneur d'écoulement comprenant à la fois une plaque perforée et une plaque poreuse,
- la figure 6 est une vue en coupe axiale analogue à celle de la figure 5, mais montrant également des prises de pression réalisées dans le support en forme de couronne, et
- la figure 7 montre des courbes donnant la perte de charge de différentes plaques poreuses utilisables dans un conditionneur d'écoulement selon l'invention.

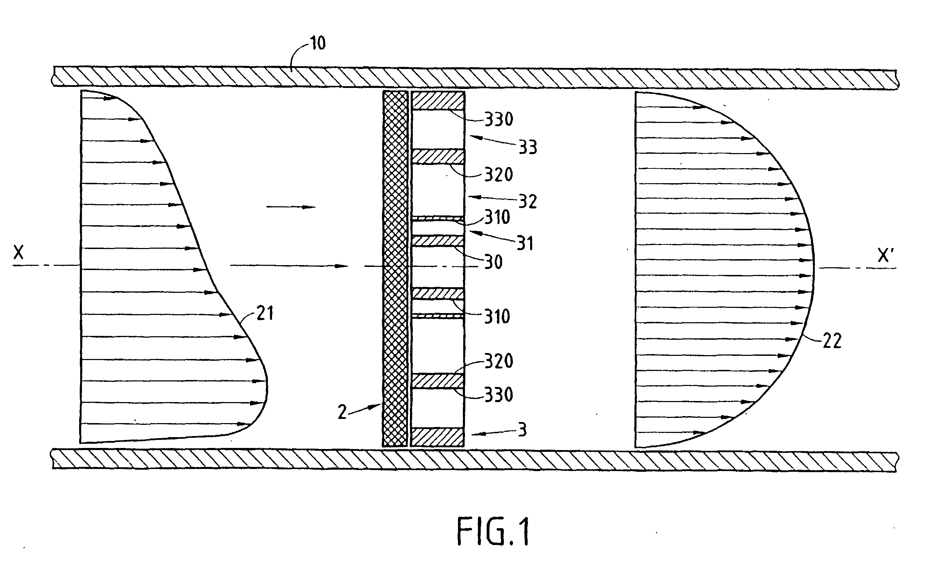

Un conditionneur d'écoulement selon l'invention comprend essentiellement une plaque perforée 3 (figures 1 à 3) qui est disposée essentiellement perpendiculairement à l'axe XX' de la canalisation 10 de transport de gaz et constitue déjà en elle-même un conditionneur d'écoulement dont l'efficacité est optimisée, compte tenu de la répartition des ouvertures formées dans cette plaque 3. La plaque perforée 3 participe ainsi à l'atténuation des perturbations et au redéveloppement rapide de l'écoulement en aval et peut être utilisée seule dans la mesure où la position des trous et leurs dimensions ont été étudiées pour que l'écoulement en sortie soit symétrique par rapport à l'axe de la canalisation, sans rotation de la veine gazeuse et avec un niveau de turbulence comparable à celui d'un écoulement pleinement développé, pour favoriser son redéveloppement rapide.

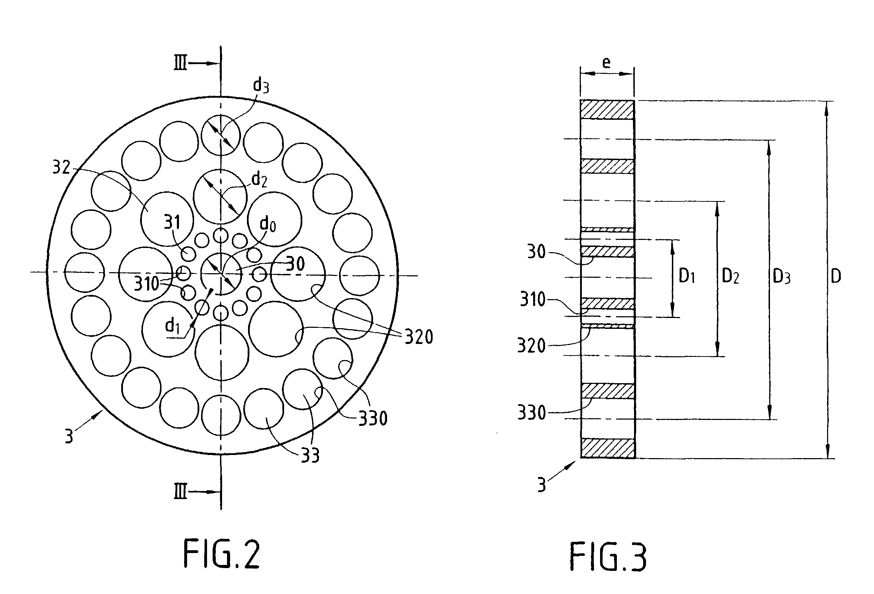

Comme on peut le voir sur les figures 2 et 3, la plaque perforée 3 comprend un trou central 30 de diamètre d₀, une première couronne interne 31 comportant un ensemble de trous 310 de petit diamètre d₁, une deuxième couronne intermédiaire 32 comportant un ensemble de trous 320 de grand diamètre d₂ et une troisième couronne externe 33 comportant un ensemble de trous 330 dont le diamètre d₃ présente une valeur intermédiaire entre celles des diamètres d₁ et d₂.

L'épaisseur de la plaque perforée 3 est de préférence voisine du diamètre d₂ des trous 320 de la couronne intermédiaire 32.

Dans l'exemple représenté sur les figures 2 et 3, la couronne interne 31 comprend douze trous 310 dont les centres sont régulièrement répartis sur un cercle de diamètre D1, la couronne intermédiaire 32 comprend huit trous 320 dont les centres sont régulièrement répartis sur une cercle de diamètre D2 et la couronne externe 33 comprend vingt trous 330 dont les centres sont régulièrement répartis sur une cercle de diamètre D3.

Les trous 330 de la couronne externe 33 présentent avantageusement un diamètre d₃ voisin de celui du trou central 30.

A titre d'exemple, si Dl désigne le diamètre intérieur de la canalisation 10 de transport de gaz, les paramètres de la plaque perforée 3 peuvent être les suivants:
e = 0,162 Dl D₁ = 0,226 Dl
d₀ = 0,123 DI D₂ = 0,461 Dl
d₁ = 0,046 Dl D₃ = 0,844 DI
d₂ = 0,162 DI
d₃ = 0,119 DI

La plaque perforée 3, grâce à la répartition des trous, et notamment à la présence d'une première couronne interne 31 constituée d'un ensemble de petits trous 310 disposés autour d'un trou central 30 dont le diamètre d₀ est relativement important, permet, à partir d'un écoulement perturbé 21, d'obtenir un écoulement établi 22 dont les caractéristiques sont satisfaisantes dans de nombreux cas (figure 1).

L'efficacité du conditionneur d'écoulement peut cependant être améliorée si l'on adjoint à la plaque perforée 3, qui occupe toute la section de passage du gaz, une plaque poreuse 2 qui est placée en amont de la plaque perforée 3 et est mise en contact avec celle-ci de telle sorte que l'ensemble du débit de gaz traverse les deux éléments 2 et 3 (figure 1). La plaque perforée 3 sert alors également de support mécanique pour la plaque poreuse 2 qui peut elle-même subir une poussée importante dans le sens de l'écoulement, proportionnelle à la perte de charge qu'elle impose. La plaque poreuse 2 contribue à éliminer les dissymétries et à atténuer les forts niveaux de turbulences.

La plaque poreuse 2 a un excellent pouvoir homogénéisant sur l'écoulement tout en détruisant les grosses structures turbulentes. Le matériau utilisé est un matériau homogène ayant une porosité comprise entre 90 et 96 % (fraction de vide par rapport au volume total). La surface de contact avec l'écoulement est fonction des dimensions des mailles et varie de 500m2/m3 pour des mailles grossières à 2500m2/m3 pour des mailles fines. Par conséquent, plus les mailles sont fines plus la perte de charge par viscosité augmente. Pour de l'air à la pression atmosphérique à la vitesse de 10 m.s-1 le coefficient de perte de charge (Perte de charge / Pression dynamique) d'une plaque 2 de matériau poreux de 10 mm d'épaisseur varie de 2,7 à 15,7.

A titre d'exemple, le matériau poreux de la plaque poreuse 2 peut être constitué par une mousse de nickel-chrome très aérée commercialisée sous le nom de Celmet par la société SUMITOMO EUROPE LTD.

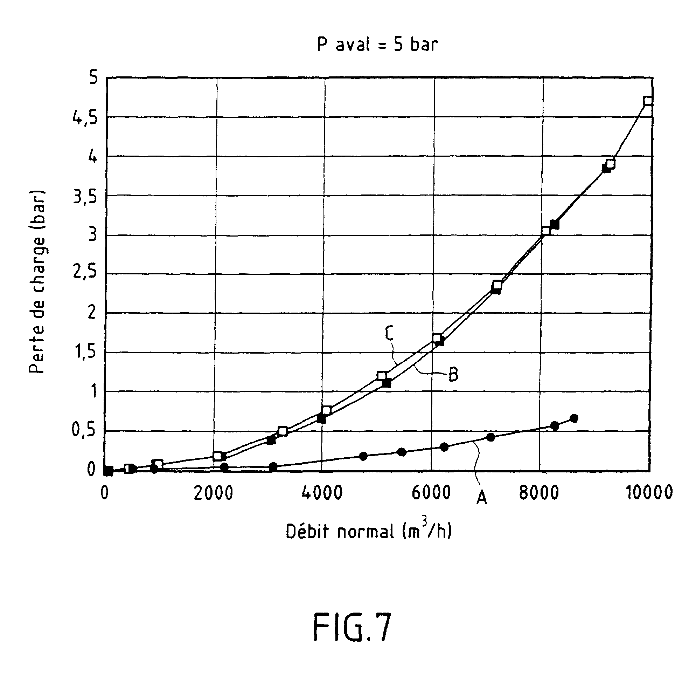

La figure 7 représente la courbe de perte de charge en bar d'une plaque de 80 mm de diamètre et 10 mm d'épaisseur de Celmet en fonction du débit normal en m³/h (débit ramené aux conditions normales de pression et température c'est-à-dire, 1,013 bar et 273,15 K) et pour une pression aval constante de 5 bar.

La densité du matériau poreux utilisé peut être adaptée suivant les besoins. Un grain plus fin sera plus efficace pour éliminer les perturbations d'écoulement, par contre un grain plus gros permet d'éviter les risques de colmatage. Le choix est une affaire de compromis entre ces deux contraintes.

Sur la figure 7, la courbe A correspond à un matériau Celmet à gros grain, la courbe B correspond à un matériau Celmet à grain fin et la courbe C correspond à un matériau Celmet à grain fin après un an d'utilisation sur un réseau de transport de gaz.

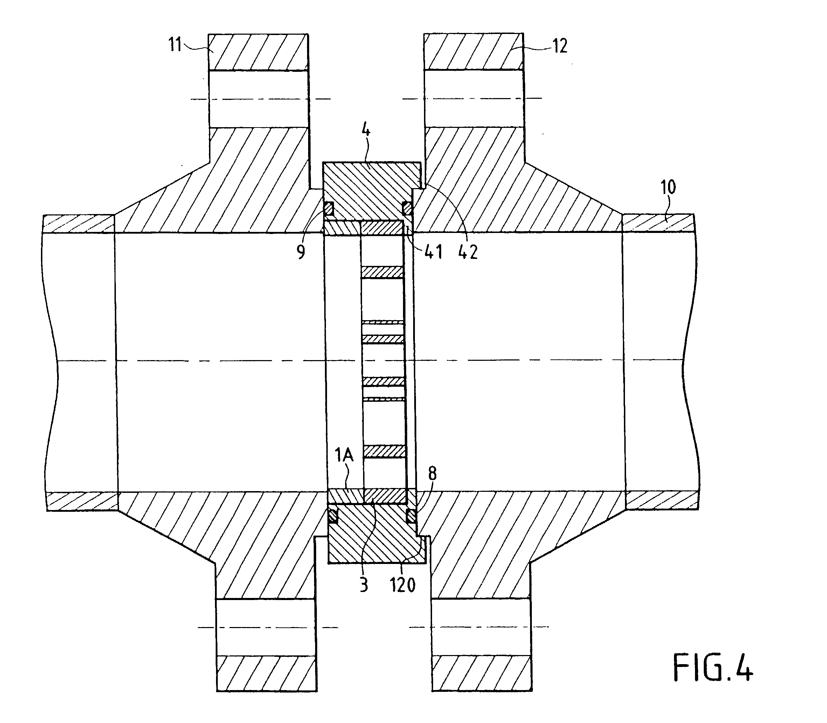

On décrira maintenant en référence aux figures 4 à 6 des exemples de montage d'un conditionneur d'écoulement selon l'invention, entre deux brides 11, 12 d'une canalisation 10.

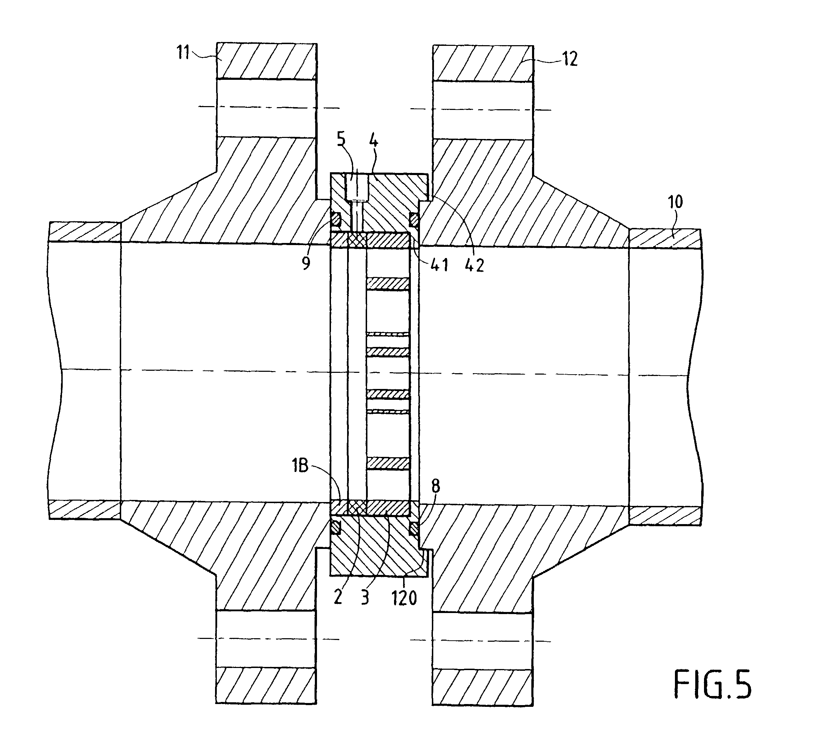

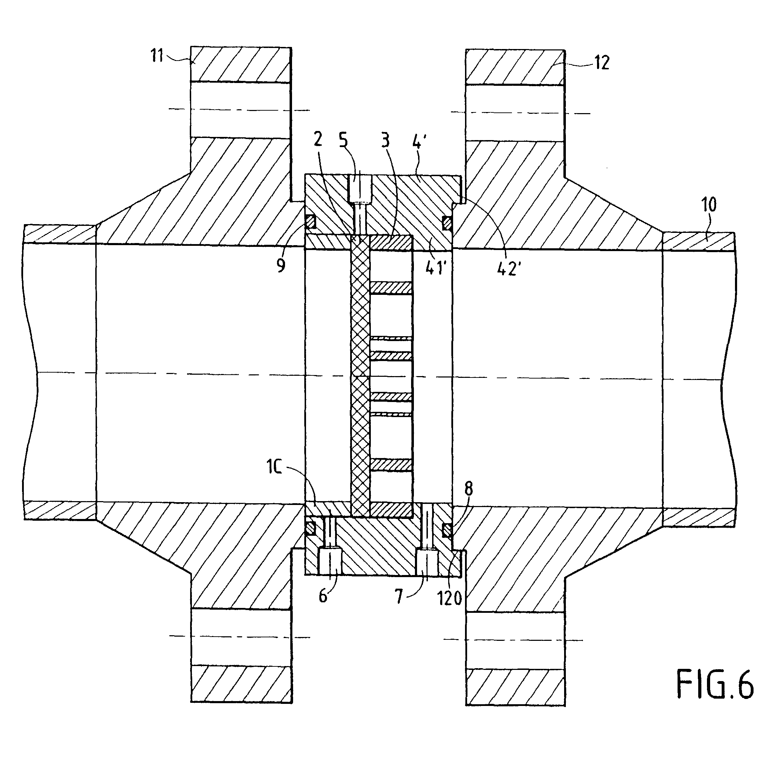

Pour bien assurer le centrage, par rapport à l'axe de la canalisation 10, de l'ensemble constitué par le conditionneur d'écoulement proprement dit constitué d'une plaque perforée 3 (figure 4) ou de l'association d'une plaque perforée 3 et d'une plaque poreuse 2 (figures 5 et 6), et maintenir les éléments actifs 2, 3 du conditionneur d'écoulement perpendiculairement à la canalisation 10, ces éléments actifs 2, 3 sont maintenus dans un support 4, 4' en forme de couronne, lui-même maintenu entre les brides 11, 12 des tronçons de conduite 10 amont et aval.

Une bague entretoise amovible 1A (figure 4), 1B (figure 5) ou 1C (figure 6) dont l'épaisseur dans le sens axial est adaptée à la fois à celle de la couronne support 4, 4' et à celle du ou des éléments actifs 2, 3 du conditionneur d'écoulement, assure le maintien de la plaque perforée 3 (figure 4) ou de l'ensemble de la plaque poreuse 2 et de la plaque perforée 3 (figures 5 et 6) contre un épaulement annulaire aval 41, 41' formé dans le support annulaire extérieur 4, 4' pour servir de butée.

Le support 4, 4' est ainsi percé d'une ouverture circulaire qui est concentrique à la pièce elle-même et présente deux parties. La partie amont qui prend presque toute la longueur de la pièce 4, 4' est percée dans un diamètre correspondant au diamètre extérieur des pièces 1A, 1B, 1C, 2 et 3 de telle façon que les pièces 1A, 3 ou 1B, 2, 3 ou 1C, 2, 3 viennent se loger dans le support 4,4'. La partie aval est percée dans un diamètre légèrement inférieur, égal au diamètre intérieur de la canalisation 10 de transport de gaz, de manière à définir un épaulement 41, 41' sur lequel vient reposer l'empilement constitué par les pièces citées plus haut.

La somme des épaisseurs des trois pièces (bague 1B ou 1C, plaque poreuse 2 et plaque perforée 3) doit être légèrement supérieure à la longueur de l'ouverture circulaire du support 4, 4' dans lequel ces pièces viennent s'empiler, prise entre l'épaulement 41, 41' et la face amont, de telle sorte que le serrage de l'ensemble entre les brides 11, 12 vienne écraser légèrement le corps poreux 2 et bloquer complètement l'empilement. On évite ainsi tout jeu susceptible de provoquer des vibrations et du bruit. L'étanchéité est assurée par deux joints toriques 8, 9 encastrés dans des gorges usinées sur chacune des faces du support 4, 4' qui sont en contact avec les faces surélevées des brides 11, 12.

Les diamètres intérieurs de l'épaulement 41, 41' du support 4, 4' et de la bague 1A, 1B, 1C sont identiques et égaux au diamètre intérieur de la conduite 10 de telle sorte qu'il n'y ait pas de variation brutale de diamètre intérieur qui perturbe l'écoulement.

Un trou radial optionnel (5) percé dans le support 4, 4' permet de connecter le rejet du pilote d'un détendeur quand le conditionneur est monté directement en aval de celui-ci. Ceci présente l'avantage, dans le cas où le dispositif est placé directement en aval du détendeur, de pouvoir compter le débit du système de pilotage. Ce trou débouche dans la plaque poreuse 2. Ceci a pour effet de diffuser le jet provoqué par le débit du pilote et ainsi d'atténuer la dissymétrie engendrée autrement aux faibles débits en l'absence de conditionneur.

Un épaulement 42, 42' est ménagé à la périphérie de la face aval du support 4. 4' de manière à faciliter le centrage de l'ensemble par rapport à la bride aval 12. Cet épaulement 42, 42' vient s'ajuster autour de la face surélevée 120 de la bride 12 de la canalisation aval. Il faut s'assurer que l'épaisseur de l'épaulement 42, 42' soit inférieure à l'épaisseur de la face de contact 120 de la bride 12 de telle sorte que le contact se fasse au niveau du joint torique 8 et non pas au niveau de l'épaulement 42, 42'.

Dans le mode de réalisation de la figure 6, le support 4' a une largeur supérieure à celle du support 4 des figures 4 et 5 de manière à permettre le percement de deux trous radiaux 6, 7, dont l'un (trou 6) est situé en amont de la plaque poreuse 2 et l'autre (trou 7) est situé en aval de la plaque perforée 3.

En connectant à ces deux trous 6, 7 un manomètre différentiel, il est possible de surveiller l'évolution de la perte de charge de part et d'autre du conditionneur et ainsi de connaître le degré d'encrassement du corps poreux 2. Ceci est particulièrement utile en aval d'une forte détente dans les zones où le gaz contient un taux élevé de substances susceptibles de se condenser.

Le conditionneur selon l'invention est particulièrement adapté pour être monté en aval d'un régulateur-détendeur dans un poste de livraison de gaz, la perte de charge de la plaque poreuse 2 pouvant alors sans inconvénient être relativement importante. D'une manière générale, le conditionneur selon l'invention est adapté pour pouvoir se placer directement en aval de n'importe lequel des obstacles habituellement rencontrés dans des postes de livraison de gaz, tels que coude, double coude, divergent, convergent, etc...

Le conditionneur d'écoulement selon l'invention est prévu pour pouvoir se placer non seulement contre la bride amont 12 d'un tronçon de canalisation aval, mais aussi directement contre la bride amont 12 d'un compteur de gaz, tel qu'un compteur à turbine, sans qu'il soit nécessaire de laisser une longueur droite entre le conditionneur et le compteur.

Ainsi, avec un conditionneur d'écoulement selon l'invention, on peut éliminer les longueurs droites habituellement recommandées entre le compteur et le dernier obstacle, qui varient suivant les pays et les compagnies gazières de l'ordre de 5 à 10 DN. Par exemple la norme Américaine AGA 7 sur les compteurs à turbine recommande en configuration standard l'usage d'un conditionneur en laissant au minimum 5 DN entre la face aval du conditionneur et le compteur et 10 DN entre le compteur et le dernier obstacle où DN représente le diamètre nominal de la canalisation (par exemple 150 mm).

Dans le sens axial, le conditionneur d'écoulement selon l'invention présente un encombrement très réduit, qui peut représenter une longueur inférieure à DN/3.

On notera que, dès lors que l'ensemble se trouve intégralement entre brides et non pas inséré à l'intérieur d'une portion droite de canalisation, le montage et le démontage sont facilités. Le déboulonnage de la moitié des boulons permet de retirer l'ensemble. II n'est pas nécessaire de retirer une portion de conduite.

La disposition par empilement dans un support 4, 4' de divers éléments concentriques 1A, 3; 1B, 2, 3; 1C, 2, 3 permet de facilement modifier la configuration du conditionneur et à volonté d'ajouter ou supprimer la plaque poreuse 2 sans modifier la configuration du poste de livraison de gaz.

La présence d'une plaque poreuse 2 présente l'avantage de protéger le compteur contre la projection de débris ou de blocs de glace ou d'hydrates, pouvant endommager les pales du compteur s'il s'agit d'un compteur à turbine.

## Revendications

1. Conditionneur d'écoulement pour canalisation de transport de gaz, comprenant au moins une plaque perforée (3) disposée essentiellement perpendiculairement à l'axe XX' de la canalisation (10) et comportant un trou central (30) et des ensembles (31 à 33) de trous supplémentaires (310, 320, 330) régulièrement répartis selon des couronnes concentriques centrées sur l'axe de la canalisation (10), **caractérisé en ce que** les trous supplémentaires sont répartis selon au moins trois couronnes concentriques de manière à définir une plaque perforée axisymétrique, **en ce qu'**au sein d'une même couronne (31, 32, 33), les trous circulaires (310, 320, 330) présentent un même diamètre d₁, d₂, d₃, **en ce que**, lorsque l'on s'éloigne du trou central et que l'on passe d'une couronne à une autre couronne concentrique voisine, le diamètre des trous est modifié alternativement dans le sens d'une réduction et d'un accroissement et **en ce que** chaque couronne (31, 32, 33) comprend un nombre de trous (310, 320, 330) égal ou supérieur à six.

2. Conditionneur d'écoulement selon la revendication 1, **caractérisé en ce que** la plaque perforée (3) comprend autour du trou central circulaire (30), lorsque l'on s'éloigne de l'axe XX' de la canalisation (10), une première couronne interne (31) comportant un ensemble de trous (310) de petit diamètre d₁, une deuxième couronne intermédiaire (32) comportant un ensemble de trous (320) de grand diamètre d₂ et une troisième couronne externe (33) comportant un ensemble de trous (330) dont le diamètre d₃ présente une valeur intermédiaire entre celles du petit diamètre d₁ et du grand diamètre d₂

3. Conditionneur d'écoulement selon la revendication 1 ou la revendication 2, **caractérisé en ce que** la plaque perforée (3) comprend un trou central (30), douze trous (310) de petit diamètre d₁ constituant une première couronne interne (31), huit trous (320) de grand diamètre d₂ constituant une deuxième couronne intermédiaire (32) et vingt trous (330) de diamètre intermédiaire d₃ constituant une troisième couronne externe (33).

4. Conditionneur d'écoulement selon la revendication 2 ou la revendication 3, **caractérisé en ce que** le diamètre intermédiaire d₃ des trous (330) constituant la troisième couronne externe (33) de la plaque perforée (3) est voisin du diamètre d₀ du trou central (30).

5. Conditionneur d'écoulement selon l'une quelconque des revendications 2 à 4, **caractérisé en ce que** la plaque perforée (3) présente une épaisseur e sensiblement égale au diamètre d₂ des trous (320) de la deuxième couronne intermédiaire (32).

6. Conditionneur d'écoulement selon l'une quelconque des revendications 2 à 5, **caractérisé en ce que** si Dl désigne le diamètre intérieur de la canalisation (10) à laquelle est associé le conditionneur d'écoulement, dans la plaque perforée (3), les trous (310) de petit diamètre d₁ sont répartis sur une première couronne interne (31) dont le diamètre moyen D1 est égal à environ 0,23 Dl, les trous (320) de grand diamètre d₂ sont répartis sur une deuxième couronne intermédiaire (32) dont le diamètre moyen D2 est égal à environ 0,46 Dl et les trous (330) de diamètre intermédiaire d₃ sont répartis sur une troisième couronne externe (33) dont le diamètre moyen D3 est égal à environ 0,84 Dl.

7. Conditionneur d'écoulement selon l'une quelconque des revendications 2 à 6, **caractérisé en ce que** si Dl désigne le diamètre intérieur de la canalisation (10) à laquelle est associé le conditionneur d'écoulement, dans la plaque perforée (3), le trou central (30) présente un diamètre d₀ égal à environ 0,12 Dl, les trous (310) de la première couronne interne (31) présentent un diamètre d₁ égal à environ 0,05 Dl, les trous (320) de la deuxième couronne intermédiaire (32) présentent un diamètre d₂ égal à environ 0,16 Dl et les trous (330) de la troisième couronne externe (33) présentent un diamètre d₃ égal à environ 0,12 Dl.

8. Conditionneur d'écoulement selon l'une quelconque des revendications 1 à 7, **caractérisé en ce que** la plaque perforée (3) est associée à une plaque poreuse (2) située en amont de la plaque perforée (3) parallèlement à celle-ci.

9. Conditionneur d'écoulement selon la revendication 8, **caractérisé en ce que** la plaque poreuse (2) est réalisée en un matériau homogène ayant une porosité comprise entre 90 et 96%, et dont la surface de contact avec l'écoulement est fonction des dimensions des mailles et est comprise entre 500m²/m³ et 2500m²/m³.

10. Conditionneur d'écoulement selon la revendication 8 ou la revendication 9, **caractérisé en ce que** la plaque poreuse (2) présente une épaisseur de l'ordre de 10 mm et est réalisée en une mousse de nickel-chrome très aérée.

11. Conditionneur d'écoulement selon l'une quelconque des revendications 1 à 10, **caractérisé en ce qu'**il comprend un support annulaire extérieur (4) qui est destiné à être monté entre deux brides (11, 12) de la canalisation (10) et à l'intérieur duquel est placée la plaque perforée (3) et le cas échéant la plaque poreuse (2).

12. Conditionneur d'écoulement selon la revendication 11, **caractérisé en ce que** le support annulaire extérieur (4, 4') comprend un épaulement annulaire aval (41, 41') servant de butée pour la plaque perforée (3) et **en ce que** la plaque perforée (3) est maintenue plaquée contre ledit épaulement annulaire aval (41, 41') à l'aide d'une bague entretoise amovible (1A, 1B, 1C).

13. Conditionneur d'écoulement selon la revendication 12, **caractérisé en ce qu'**il comprend une plaque poreuse (2) intercalée entre une bague entretoise amovible (1B, 1C) et la plaque perforée (3) elle-même en butée contre l'épaulement annulaire aval (41, 41').

14. Conditionneur d'écoulement selon la revendication 13, **caractérisé en ce que** le support annulaire extérieur (4') comprend des prises de pression (6, 7) radiales situées respectivement au niveau de la bague entretoise amovible amont (1C) et au niveau de l'épaulement aval (41') pour permettre des mesures de pression différentielle.

15. Conditionneur d'écoulement selon l'une quelconque des revendications 1 à 14, **caractérisé en ce qu'**il est disposé en aval d'un régulateur-détendeur et en amont d'un compteur et présente dans le sens axial une dimension qui n'excède pas environ le tiers du diamètre nominal Dl de la canalisation de gaz.

16. Conditionneur d'écoulement selon la revendication 8 et la revendication 15 en tant qu'elle se rattache à l'une quelconque des revendications 11 à 14, **caractérisé en ce que** le support annulaire extérieur (4') est percé d'un trou radial (5) pour connecter le rejet du pilote du détendeur, lequel trou radial (5) est situé au niveau de la plaque poreuse (2) pour diffuser le jet provoqué par le débit du pilote.

## Claims

1. Flow conditioner for gas-conveying pipe, comprising at least one perforated plate (3) arranged essentially perpendicular to the axis XX' of the pipe (10) and comprising a central hole (30) and sets (31 to 33) of additional holes (310, 320, 330) regularly distributed around concentric rings centred on the axis of the pipe (10),
**characterized in that** the additional holes are distributed around at least three concentric rings so as to define an asymmetric perforated plate; **in that** within the same ring (31, 32, 33), the circular holes (310, 320, 330) have the same diameter d₁, d₂, d₃; **in that**, when moving away from the central hole and passing from one ring to another neighbouring concentric ring, the diameter of the holes changes alternately in the sense of a reduction and of an increase and **in that** each ring (31, 32, 33) comprises a number of holes (310, 320, 330) that is equal to or greater than six.

2. Flow conditioner according to Claim 1, **characterized in that** the perforated plate (3) comprises, around the circular central hole (30), when moving away from the axis XX' of the pipe (10), a first inner ring (31) comprising a set of holes (310) of small diameter d₁, a second intermediate ring (32) comprising a set of holes (320) of large diameter d₂ and a third outer ring (33) comprising a set of holes (330), the diameter d₃ of which has a value intermediate between those of the small diameter d₁ and the large diameter d₂.

3. Flow conditioner according to Claim 1 or Claim 2, **characterized in that** the perforated plate (3) comprises a central hole (30), twelve holes (310) of small diameter d₁ forming a first inner ring (31), eight holes (320) of large diameter d₂ forming a second intermediate ring (32) and twenty holes (330) of intermediate diameter d₃ forming a third outer ring (33).

4. Flow conditioner according to Claim 2 or Claim 3, **characterized in that** the intermediate diameter d₃ of the holes (330) forming the third outer ring (33) of the perforated plate (3) is close to the diameter d₀ of the central hole (30).

5. Flow conditioner according to any one of Claims 2 to 4, **characterized in that** the perforated plate (3) has a thickness e which is substantially equal to the diameter d₂ of the holes (320) of the second intermediate ring (32).

6. Flow conditioner according to any one of Claims 2 to 5, **characterized in that**, if DI denotes the inner diameter of the pipe (10) with which the flow conditioner is associated, in the perforated plate (3), the holes (310) of small diameter d₁ are distributed on a first inner ring (31), the mean diameter D1 of which is equal to about 0.23 DI, the holes (320) of large diameter d₂ are distributed on a second intermediate ring (32), the mean diameter D2 of which is equal to about 0.46 DI and the holes (330) of intermediate diameter d₃ are distributed on a third outer ring (33), the mean diameter D3 of which is equal to about 0.84 DI.

7. Flow conditioner according to any one of Claims 2 to 6, **characterized in that** if DI denotes the inner diameter of the pipe (10) with which the flow conditioner is associated, in the perforated plate (3), the central hole (30) has a diameter d₀ equal to about 0.12 DI, the holes (310) of the first inner ring (31) have a diameter d₁ equal to about 0.05 DI, the holes (320) of the second intermediate ring (32) have a diameter d₂ equal to about 0.16 DI and the holes (330) of the third outer ring (33) have a diameter d₃ equal to about 0.12 DI.

8. Flow conditioner according to any one of Claims 1 to 7, **characterized in that** the perforated plate (3) is associated with a porous plate (2) located upstream of and parallel to the perforated plate (3).

9. Flow conditioner according to Claim 8, **characterized in that** the porous plate (2) is made from a homogeneous material having a porosity of between 90 and 96%, and whose area in contact with the flow depends on the dimensions of the mesh and is between 500 m²/m³ and 2500 m²/m³.

10. Flow conditioner according to Claim 8 or Claim 9, **characterized in that** the porous plate (2) has a thickness of about 10 mm and is made from a highly aerated nickel-chrome foam.

11. Flow conditioner according to any one of Claims 1 to 10, **characterized in that** it comprises an outer annular support (4) which is intended to be mounted between two flanges (11, 12) of the pipe (10) and inside which the perforated plate (3), and where appropriate the porous plate (2), is placed.

12. Flow conditioner according to Claim 11, **characterized in that** the outer annular support (4, 4') comprises a downstream annular shoulder (41, 41') acting as a stop for the perforated plate (3) and **in that** the perforated plate (3) is kept pressed against the said downstream annular shoulder (41, 41') with the help of a removable spacer ring (1A, 1B, 1C).

13. Flow conditioner according to Claim 12, **characterized in that** it comprises a porous plate (2) inserted between a removable spacer ring (1B, 1C) and the perforated plate (3) itself stops against the downstream annular shoulder (41, 41').

14. Flow conditioner according to Claim 13, **characterized in that** the outer annular support (4') comprises radial pressure take-offs (6, 7) located respectively at the upstream removable spacer ring (1C) and at the downstream shoulder (41') to allow measurements of differential pressure.

15. Flow conditioner according to any one of Claims 1 to 14, **characterized in that** downstream there is a pressure reducer and upstream, there is a meter and in the axial direction, they have a dimension which does not exceed about a third of the nominal diameter DN of the gas pipe.

16. Flow conditioner according to Claim 8 and Claim 15, in so far as it depends on any one of Claims 11 to 14, **characterized in that** the external annular support (4') is pierced with a radial hole (5) in order to connect the discharge of the pilot of the pressure regulating valve, the radial hole (5) being located level with the porous plate (2) in order to diffuse the jet caused by the flow from the pilot.

## Patentansprüche

1. Strömungskonditionierer für eine Gastransportleitung, umfassend mindestens eine perforierte, im wesentlichen senkrecht zur Achse XX' der Leitung (10) angeordnete Platte (3), die ein zentrales Loch (30) und Gruppen (31 bis 33) von zusätzlichen Löchern (310, 320, 330) aufweist, die regelmäßig auf zentrisch zur Achse der Leitung (10) angeordneten konzentrischen Kränzen verteilt sind, **dadurch gekennzeichnet, dass** die zusätzlichen Löcher auf mindestens drei konzentrische Kränze aufgeteilt sind, so dass eine achsensymmetrische perforierte Platte gebildet wird, dass die jeweils in ein und demselben Kranz (31, 32, 33) angeordneten kreisförmigen Löcher (310, 320, 330) denselben Durchmesser d₁, d₂, d₃ haben, dass ausgehend vom zentralen Loch von dem einen zum nächsten konzentrischen benachbarten Kranz der Durchmesser der Löcher abwechselnd im Sinne einer Verkleinerung und einer Vergrößerung alterniert, und dass jeder Kranz (31, 32, 33) eine Anzahl von sechs oder mehr Löchern (310, 320, 330) umfasst.

2. Strömungskonditionierer nach Anspruch 1, **dadurch gekennzeichnet, dass** die perforierte Platte (3) ausgehend von der Achse XX' der Leitung (10) um das zentrale Loch (30) herum einen ersten inneren Kranz (31) mit einer Gruppe von Löchern (310) mit kleinem Durchmesser d₁, einen zweiten Mittelkranz (32) mit einer Gruppe von Löchern (320) mit großem Durchmesser d₂ und einen dritten äußeren Kranz (33) mit einer Gruppe von Löchern (330) umfasst, deren Durchmesser d₃ einen Zwischenwert zwischen denen des kleinen Durchmessers d₁ und des großen Durchmessers d₂ bildet.

3. Strömungskonditionierer nach Anspruch 1 oder 2, **dadurch gekennzeichnet, dass** die perforierte Platte (3) ein zentrales Loch (30), zwölf Löcher (310) kleinen Durchmessers d₁, die einen ersten, inneren Kranz (31) bilden, acht Löcher (320) großen Durchmessers d₂, die einen zweiten, mittleren Kranz (32) bilden, und zwanzig Löcher (330) von mittelgroßem Durchmesser d₃ umfasst, welche einen dritten, äußeren Kranz (33) bilden.

4. Strömungskonditionierer nach Anspruch 2 oder 3, **dadurch gekennzeichnet, dass** der mittelgroße Durchmesser d₃ der den dritten, äußeren Kranz (33) der Platte (3) bildenden Bohrungen (330) nahe beim Durchmesser d₀ der zentralen Bohrung (30) liegt.

5. Strömungskonditionierer nach einem der Ansprüche 2 bis 4, **dadurch gekennzeichnet, dass** die perforierte Platte (3) eine Dicke e hat, die im wesentlichen gleich dem Durchmesser d₂ der Bohrungen (320) des zweiten, mittleren Kranzes (32) ist.

6. strömungskonditionierer nach einem der Ansprüche 2 bis 5, **dadurch gekennzeichnet, dass**, wenn DI den Innendurchmesser der Leitung (10) bezeichnet, welcher der Strömungskonditionierer zugeordnet ist, in der perforierten Platte (3) die Löcher (310) kleinen Durchmessers d₁ auf einem ersten, inneren Kranz (31) verteilt sind, dessen Mittendurchmesser D₁ ungefähr gleich 0,23 DI ist, die Löcher (320) großen Durchmessers d₂ auf einem zweiten, mittleren Kranz (32) verteilt sind, dessen Mittendurchmesser D2 ungefähr gleich 0,46 DI ist, und die Löcher (330) mittelgroßen Durchmessers d₃ auf einem dritten, äußeren Kranz (33) verteilt sind, dessen Mittendurchmesser D3 ungefähr gleich 0,84 DI ist.

7. Strömungskonditionierer nach einem der Ansprüche 2 bis 6, **dadurch gekennzeichnet, dass**, wenn DI den Innendurchmesser der Leitung (10) bezeichnet, welcher der Strömungskonditionierer zugeordnet ist, in der perforierten Platte (3) das zentrale Loch (30) einen Durchmessers d₀ hat, der ungefähr gleich 0,12 DI ist, die Löcher (310) auf dem ersten, inneren Kranz (31) einen Durchmesser d₁ haben, der ungefähr gleich 0,05 DI ist, die Löcher (320) auf dem zweiten, mittleren Kranz (32) einen Durchmesser d₂ haben, der ungefähr gleich 0,16 DI ist, und die Löcher (330) auf dem dritten, äußeren Kranz (33) einen Durchmesser d₃ haben, der ungefähr gleich 0,12 DI ist.

8. Strömungskonditionierer nach einem der Ansprüche 1 bis 7, **dadurch gekennzeichnet, dass** die perforierte Platte (3) einer porösen Platte (2) zugeordnet ist, die stromauf der perforierten Platte (3) parallel zu dieser angeordnet ist.

9. Strömungskonditionierer nach Anspruch 8, **dadurch gekennzeichnet, dass** die poröse Platte (2) aus einem homogenen Material mit einer zwischen 90 und 96 % liegenden Porosität hergestellt ist, wobei dessen Kontaktoberfläche zur Strömung in Funktion der Abmessungen der Poren im Bereich zwischen 500 m²/m³ und 2500 m²/m³ liegt.

10. Strömungskonditionierer nach Anspruch 8 oder 9, **dadurch gekennzeichnet, dass** die poröse Platte (2) eine Dicke in der Größenordnung von 10 mm hat und aus einem sehr luftigen Nickel-Chrom-Schwamm hergestellt ist.

11. Strömungskonditionierer nach einem der Ansprüche 1 bis 10, **dadurch gekennzeichnet, dass** er einen äußeren ringförmigen Halter (4) umfasst, der zwischen zwei Flanschen (11, 12) der Leitung zu montieren ist, und in dessen Innerem die perforierte Platte (3) und ggf. die poröse Platte (2) angeordnet ist.

12. Strömungskonditionierer nach Anspruch 11, **dadurch gekennzeichnet, dass** der äußere ringförmige Halter (4, 4') eine stromab liegende ringförmige Schulter (41, 41') aufweist, die als Anschlag für die perforierte Platte (3) dient, und dass die perforierte Platte (3) gegen diese stromab liegende ringförmige Schulter (41, 41') mithilfe eines beweglichen Abstandsrings (1A, 1B, 1C) angedrückt wird.

13. Strömungskonditionierer nach Anspruch 12, **dadurch gekennzeichnet, dass** er eine zwischen einem beweglichen Abstandsring (1B, 1C) und der perforierten Platte (3) liegende poröse Platte (2) umfasst, wobei die perforierte Platte (3) selbst gegen den Anschlag der ringförmigen, stromab liegenden Schulter (41, 41') anliegt.

14. Strömungskonditionierer nach Anspruch 13, **dadurch gekennzeichnet, dass** der äußere ringförmige Halter (4') radiale Druckabnahmebohrungen (6, 7) umfasst, die jeweils in Höhe des beweglichen, stromauf liegenden Abstandsringes (1C) und in Höhe der stromab liegenden Schulter (41') liegen, um Messungen des Differenzdrucks zu ermöglichen.

15. Strömungskonditionierer nach einem der Ansprüche 1 bis **14, dadurch gekennzeichnet, dass** er stromab eines Druckreglers/-Minderers und stromauf von einem Zähler angeordnet ist und im axialen Sinne eine Abmessung hat, die ein Drittel des Nenndurchmessers DN der Gasleitung nicht überschreitet.

16. Strömungskonditionierer nach Anspruch 8 und nach Anspruch 15, soweit dieser sich auf einen der Ansprüche 11 bis 14 bezieht, **dadurch gekennzeichnet, dass** der ringförmige äußere Halter (4') mit einem radialen Loch (5) durchbohrt ist, um die Rückführmenge vom Steuerventil des Druckminderers anzuschließen, wobei dieses radiale Loch (5) in Höhe der porösen Platte angeordnet ist, um den von dem Massenstrom des Steuerventils erzeugten Strahl zu zerstreuen.
